(19) Europäisches Patentamt
European Patent Office
Office européen des brevets

(11) **EP 1 982 461 B1**

(12) **FASCICULE DE BREVET EUROPEEN**

(45) Date de publication et mention
de la délivrance du brevet:
**21.09.2011 Bulletin 2011/38**

(51) Int Cl.:
***H04L 9/06*** (2006.01)

(21) Numéro de dépôt: **07730938.3**

(22) Date de dépôt: **07.02.2007**

(86) Numéro de dépôt international:
**PCT/FR2007/000222**

(87) Numéro de publication internationale:
**WO 2007/090961 (16.08.2007 Gazette 2007/33)**

(54) **Protection d'un algorithme cryptographique**

Schutz für einen kryptografischen Algorithmus

Protection of a cryptographic algorithm

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **08.02.2006 FR 0601135**

(43) Date de publication de la demande:
**22.10.2008 Bulletin 2008/43**

(73) Titulaire: **Sagem Défense Sécurité
75015 Paris (FR)**

(72) Inventeurs:
• **CHABANNE, Hervé
75015 Paris (FR)**
• **BRINGER, Julien
75015 Paris (FR)**
• **DOTTAX, Emmanuelle
75015 Paris (FR)**

(74) Mandataire: **Cabinet Plasseraud
52, rue de la Victoire
75440 Paris Cedex 09 (FR)**

(56) Documents cités:
**FR-A- 2 776 445      GB-A- 2 345 229
US-B1- 6 327 661**

**Description**

La présente invention concerne le domaine cryptographique et plus particulièrement la protection d'informations relatives aux calculs exécutés selon un algorithme cryptographique.

Les algorithmes cryptographiques permettent notamment de crypter des données et/ou de décrypter des données. On peut également utiliser de tels algorithmes pour de nombreuses autres applications. En effet, ils peuvent également servir à signer, ou encore à authentifier certaines informations. Ils peuvent être utiles aussi dans le domaine de l'horodatage.

De tels algorithmes comprennent généralement un enchaînement de plusieurs opérations, ou calculs, que l'on applique successivement sur une donnée à crypter afin d'obtenir une donnée cryptée ou encore sur une donnée cryptée afin d'obtenir une donnée décryptée.

Parmi ces algorithmes, certains sont fondés sur une utilisation de clés secrètes alors que d'autres se basent sur une utilisation mixte de clés publiques et de clés secrètes.

Quelque soit le type d'algorithme cryptographique, afin de conserver le caractère confidentiel de l'algorithme, des clés et d'autres données secrètes, il est important que les calculs exécutés restent secrets.

En effet, lorsqu'un attaquant est en mesure de déterminer les calculs exécutés selon un algorithme cryptographique, il peut ensuite accéder à des informations secrètes et violer le caractère confidentiel des données selon cet algorithme.

Dans certains algorithmes, la protection du caractère confidentiel repose sur le fait que les calculs sont exécutés dans un environnement protégé, qui n'est pas accessible à de potentiels attaquants.

Dans certains autres algorithmes, les calculs peuvent être exécutés dans un environnement accessible à de potentiels attaquants. Il est alors requis pour de tels algorithmes qu'ils présentent une résistance à des tests dits test de 'Boîte Blanche', ou en anglais 'White Box'. Ces tests visent à tenter de violer le caractère confidentiel de l'algorithme à partir des calculs exécutés au cours de la mise en oeuvre de l'algorithme.

Le document 'A white-box DES implementation for DRM applications' de S. Chow, P. Eisen, H. Johnson, et P.C. van Oorschot propose une méthode permettant une protection contre les tests de 'boîte blanche', c'est-à-dire lorsque l'implémentation complète de l'algorithme est disponible à l'attaquant. La technique employée repose sur l'utilisation de tables permettant d'implémenter les opérations de l'algorithme, après que des encodages à l'aide de bijections aient été introduits entre différentes rondes de l'algorithme.

Cependant, le document « Attacking an obfuscated cipher by injecting faults » de Matthias Jacob, Dan Boneh, et Edward W. Felten en 2003 expose une méthode permettant de retrouver les informations secrètes utilisées dans l'exécution de l'algorithme selon la méthode décrite dans le document cité précédemment.

Le document « White-Box Cryptography and an AES Implementation » de S. Chow, P. Eisen, H. Johnson, et P.C. van Oorschot propose une autre implémentation basée sur des principes similaires à ceux que le document 'A white-box DES implementation for DRM applications' énonce. Mais, des encodages sont ajoutés à l'extérieur des rondes.

Le document « Cryptanalysis of a White-Box AES implementation » de Olivier Billet, Henri Gilbert, et Charaf Ech-Chatbi expose une attaque de cette autre implémentation.

Ainsi, les méthodes de protection de ce type présentent des failles qui permettent de violer le caractère confidentiel de l'algorithme.

Supplémentairement, le document FR-A-2776445 expose un procédé et un composant électronique d'exécution d'un calcul cryptographique pour fournir un bloc de données crypté a partir d'un bloc de données initial et qui comprendre aussi l'introduction d'une opération aléatoire pour protéger le résultat du chiffrement contre le cryptanalyse.

La présente invention vise à augmenter le niveau d'une protection de la confidentialité d'un algorithme contre les tests de type 'boite blanche'.

Un premier aspect de la présente invention propose un procédé d'exécution d'un calcul cryptographique dans un composant électronique, selon un algorithme cryptographique déterminé incluant au moins une première et une deuxième opération cryptographique. L'algorithme est adapté pour fournir un bloc de données crypté à partir d'un bloc de données initial.

Le procédé comprend les étapes suivantes :

/a/ appliquer un premier système opératoire sur le bloc de données initial et obtenir un premier bloc de données intermédiaire, ledit premier système opératoire correspondant à une combinaison d'au moins la première opération cryptographique, une première opération aléatoire qui fournit une valeur déterminée avec une valeur de probabilité définie, une seconde opération aléatoire, et une opération bijective ;

/b/ appliquer un deuxième système opératoire sur le bloc de données intermédiaire fourni à l'étape précédente et obtenir un deuxième bloc de données intermédiaire, ledit deuxième système opératoire correspondant à une combinaison d'au moins l'opération inverse de l'opération bijective du système opératoire précédent, la deuxième opération cryptographique, et une opération qui fournit la valeur nulle pour une valeur associée à ladite valeur déterminée ;

/c/ répéter les étapes /a/ et /b/ N fois, N étant un nombre entier déterminé en fonction de ladite valeur de probabilité définie ; et

/d/ déterminer le bloc de données crypté à partir du ou des deuxièmes blocs de données intermédiaires, en fonction de la valeur de probabilité définie.

Grâce à ces dispositions, les opérations cryptographiques à appliquer selon l'algorithme à protéger restent secrètes pour tout attaquant. En effet, elles sont appliquées aux données à crypter de manière combinée avec au moins deux opérations aléatoires, une de ces deux opérations fournissant avec une probabilité définie une valeur déterminée. L'effet de cette première opération aléatoire n'est avantageusement annulé qu'avec l'application de l'opération qui fournit la valeur zéro pour une valeur associée à ladite valeur déterminée. Ainsi, depuis l'application de la première opération aléatoire et jusqu'à l'application de l'opération qui fournit zéro pour une valeur associée à la valeur déterminée, les données qui sont manipulées au cours de la mise en oeuvre d'une telle exécution de calculs sont protégées contre les attaques.

Lorsque le procédé correspond à l'application d'un premier et d'un second système opératoire uniquement, la valeur associée est égale à la valeur déterminée.

Il convient de noter que les termes 'opération cryptographique' correspondent à une opération cryptographique dans le sens large, c'est-à-dire que ces termes désignent aussi une succession d'opérations cryptographiques.

L'application du premier système opératoire peut correspondre à l'application de manière combinée de :

- la première opération cryptographique fournissant un premier résultat du premier système opératoire à partir du bloc de données initial ;
- la première opération aléatoire fournissant un deuxième résultat du premier système opératoire à partir du bloc de données initial ;
- la seconde opération aléatoire fournissant un troisième résultat du premier système opératoire à partir du bloc de données initial ; et
- l'opération bijective fournissant le premier bloc de données intermédiaire à partir des premier, deuxième et troisième résultats du premier système opératoire.

L'application du deuxième système opératoire peut correspondre à l'application, de manière combinée, de :

- l'opération inverse de l'opération bijective du système opératoire précédent fournissant, à partir du bloc de données intermédiaire obtenu par le système opératoire précédent, lesdits premier et deuxième résultats du système opératoire précédent ;
- la deuxième opération cryptographique fournissant un premier résultat du deuxième système opératoire à partir du premier résultat du système opératoire précédent ;
- l'opération qui fournit la valeur nulle pour une valeur associée à la valeur déterminée à partir du deuxième résultat du système opératoire précédent, fournissant ainsi un deuxième résultat du deuxième système opératoire ; et
- une addition du premier et du deuxième résultat du deuxième système opératoire fournissant le deuxième bloc de données intermédiaire.

Chaque donnée du premier et du deuxième bloc de données intermédiaire peut être obtenue sous forme polynomiale à partir respectivement des données du bloc de données initial et des données du premier bloc de données intermédiaire.

Les premier et deuxième systèmes opératoires peuvent être appliqués sous forme de tables de valeurs respectivement au bloc de données initial et au premier bloc de données intermédiaire.

La première opération aléatoire qui fournit une valeur déterminée avec une valeur de probabilité définie peut être effectuée dans un espace mathématique fini dans lequel elle fournit au plus un ensemble déterminé de valeurs ; et
dans lequel l'opération qui fournit la valeur nulle pour une valeur associée à ladite valeur déterminée fournit la valeur nulle en outre pour les autres valeurs dudit ensemble.

Ainsi, le nombre N correspondant au nombre d'itération des étapes pour déterminer le bloc de données cryptées peut avantageusement être égal à 1.

Le procédé peut comprendre en outre entre l'étape /a/ et l'étape /b/, lorsque l'algorithme inclut un ensemble de K opération(s) cryptographique(s) supplémentaire(s) entre les première et deuxième opérations cryptographiques, K étant un entier positif, l'étape suivante :

- appliquer un nombre K de système(s) opératoire(s) supplémentaire(s) (108) successifs respectivement associés audit ensemble d'opération(s) cryptographique(s) supplémentaire(s), chaque système opératoire supplémentaire fournissant un bloc de données intermédiaire supplémentaire (114), à partir du bloc de données intermédiaire (107) fourni par le système opératoire précédent ;

dans lequel chaque système opératoire supplémentaire correspond à une combinaison d'au moins l'opération inverse (109) de l'opération bijective du système opératoire précédent, l'opération cryptographique supplémentaire (110) associée audit système opératoire supplémentaire, une opération supplémentaire (111), une opération aléatoire (112) et une opération bijective (113).

Dans ce cas, la valeur associée à la valeur déterminée pour laquelle la fonction s'annule correspond avantageusement à la valeur résultant de l'application de l'opération supplémentaire sur ladite valeur déterminée, ou encore des applications successives des opérations supplémentaires sur la valeur déterminée.

Le système opératoire supplémentaire peut correspondre à l'application, de manière combinée, de :

- l'opération inverse de l'opération bijective du système opératoire précédent, fournissant, à partir du bloc de données intermédiaire fourni par le système opératoire précédent, les premier, deuxième et troisième résultats du système opératoire précédent ;
- l'opération cryptographique supplémentaire fournissant un premier résultat du système opératoire supplémentaire à partir du premier résultat du système opératoire précédent ;
- l'opération supplémentaire fournissant un deuxième résultat du système opératoire supplémentaire à partir du deuxième résultat du système opératoire précédent ;
- l'opération aléatoire fournissant un troisième résultat du système opératoire supplémentaire à partir d'au moins un parmi les premier, deuxième et troisième résultats du système opératoire précédent ; et
- une opération bijective fournissant le bloc de données intermédiaire supplémentaire à partir des premier, deuxième et troisième résultats du système opératoire supplémentaire.

L'opération supplémentaire peut avantageusement correspondre à une opération d'identité et ainsi faciliter les calculs. Dans un tel cas, la valeur associée à la valeur déterminée, pour laquelle la seconde opération spécifique fournit une valeur nulle, est plus précisément égale à cette valeur déterminée.

De même, les opérations bijectives peuvent avantageusement correspondre à des opérations bijectives linéaires et ainsi alléger les calculs.

Un second aspect de la présente invention propose un composant électronique d'exécution d'un calcul cryptographique selon un algorithme cryptographique incluant au moins une première et une deuxième opération cryptographique, ce composant électronique étant adapté pour mettre en oeuvre un procédé d'exécution de calculs selon le premier aspect de la présente invention.

L'une au moins parmi la première opération aléatoire, la seconde opération aléatoire et l'opération bijective peut différer à chaque répétition des premier et second systèmes opératoires.

D'autres aspects, buts et avantages de l'invention apparaîtront à la lecture de la description d'un de ses modes de réalisation.

L'invention sera également mieux comprise à l'aide des dessins, sur lesquels :

- la figure 1 illustre les différentes étapes d'un algorithme cryptographique comprenant une pluralité d'opérations cryptographiques ; et
- la figure 2 illustre les principales étapes d'un procédé d'exécution selon un mode de réalisation de la présente invention.

Un objectif de la présente invention est d'améliorer la résistance aux attaques contre les algorithmes cryptographiques au cours de tests dits 'boite blanche', c'est-à-dire lorsque l'implémentation de l'algorithme cryptographique à protéger est accessible à des potentiels attaquants. A cet effet, les opérations cryptographiques à appliquer à un bloc de données selon l'algorithme déterminé à protéger sont modifiées. Ainsi, au lieu d'appliquer directement et successivement les opérations cryptographiques de l'algorithme à protéger, on applique successivement des systèmes opératoires respectifs de sorte que, d'une part, les données obtenues en sortie de ces systèmes opératoires diffèrent des données obtenues en sortie des opérations cryptographiques de l'algorithme à protéger et, d'autre part, les données en sortie des différents systèmes opératoires ne permettent pas de violer la confidentialité de l'algorithme cryptographique à protéger.

Selon un mode de réalisation de la présente invention, chaque système opératoire est généré à partir de chaque opération cryptographique de l'algorithme respectivement. Plus précisément, dans chaque système opératoire correspondant à une opération cryptographique déterminée, des variables aléatoires sont introduites. Puis, au moins deux systèmes opératoires, parmi les systèmes opératoires ainsi générés à partir des différentes opérations cryptographiques de l'algorithme à protéger, comprennent en outre une première et une seconde opération spécifique respectivement.

Outre l'aléa introduit par les opérations aléatoires introduites dans chaque système opératoire, ces deux opérations spécifiques permettent d'améliorer efficacement la protection de l'algorithme cryptographique, notamment par rapport aux opérations cryptographiques qui sont exécutées entre les deux opérations cryptographiques auxquelles correspondent les deux systèmes opératoires qui comprennent ces deux opérations spécifiques.

En effet, les données de sortie de chaque système opératoire mis en oeuvre entre ces deux systèmes opératoires comprenant les deux opérations spécifiques, peuvent être captées par un potentiel attaquant sans que cela puisse menacer la confidentialité de la partie de l'algorithme à protéger qui est comprise entre les deux opérations cryptographiques de l'algorithme qui sont exécutées au sein de ces deux systèmes opératoires.

Dans le but de protéger l'ensemble des opérations cryptographiques de l'algorithme, les deux opérations spécifiques peuvent avantageusement être introduites dans le premier système opératoire généré à partir de la première opération cryptographique de l'algorithme et dans le dernier système opératoire généré à partir de la dernière opération cryptographique de l'algorithme.

La première opération spécifique correspond à une fonction aléatoire qui fournit de manière aléatoire une valeur de sortie, cette valeur de sortie prenant une valeur déterminée avec une probabilité définie.

La seconde opération spécifique correspond à une fonction qui fournit la valeur nulle en valeur de sortie pour une valeur d'entrée correspondant à une valeur associée à la valeur déterminée. De manière générale, cette valeur associée correspond à la transformation que subit la valeur déterminée, le cas échéant, suite à l'application des opérations supplémentaires des systèmes opératoires supplémentaires mis en oeuvre entre le premier et le deuxième système opératoire selon un mode de réalisation de la présente invention.

Par conséquent, dans un cas général, lorsqu'on réitère, un nombre de fois déterminé en fonction de la valeur de la probabilité définie, une application de premier et deuxième systèmes opératoires associés, telle que décrite ci-avant, on est en mesure d'annuler l'effet de la première opération spécifique par celui de la seconde opération spécifique qui lui est associée. On note que chaque ensemble de premier et deuxième systèmes opératoires associés peut avantageusement être construit avec des première et seconde opérations spécifiques associées différentes, des opérations aléatoires et des opérations bijectives différentes aussi.

Tant que l'effet de la première opération spécifique n'est pas annulé, les informations accessibles à un attaquant, pendant l'exécution de l'algorithme selon un mode de réalisation de la présente invention, diffèrent largement des données qui sont obtenues à différentes étapes d'une exécution directe de l'algorithme à protéger.

Les données susceptibles d'être captées par un attaquant en sortie de chacun des systèmes opératoires non seulement ne correspondent pas aux données qui seraient obtenues par application directe des opérations cryptographiques correspondantes, mais, en outre, elles présentent un caractère aléatoire par rapport aux données qui devraient être obtenues. Ainsi, les attaques potentielles lors de l'exécution d'un tel algorithme sont vaines.

La présente invention est décrite dans son application à un algorithme comprenant une pluralité de rondes, chaque ronde pouvant correspondre à une pluralité d'opérations cryptographiques. Toutefois, il convient de noter qu'aucune limitation n'est attachée au type d'algorithme cryptographique. En effet, la présente invention peut être appliquée aisément à tout algorithme cryptographique comprenant au moins une première et une deuxième opération cryptographique.

Dans un mode de réalisation de la présente invention, les deux opérations spécifiques sont introduites dans la première ronde et la dernière ronde. Toutefois, on peut prévoir d'introduire ces deux opérations spécifiques à n'importe quelle étape de l'algorithme à protéger.

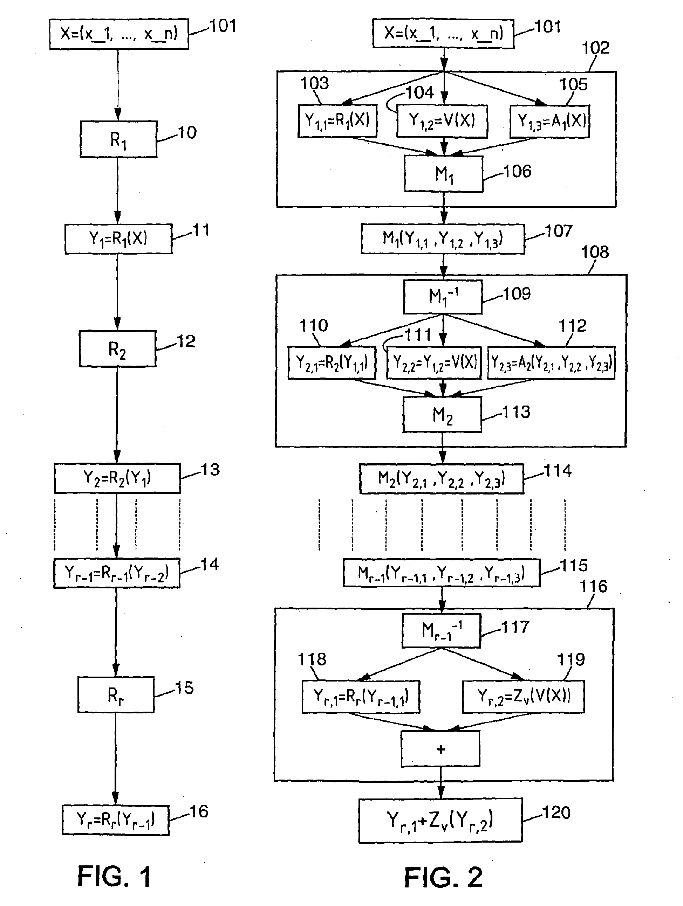

La figure 1 illustre les étapes d'un algorithme cryptographique comprenant une pluralité de rondes. A une étape 10, à un bloc de données X initial 101 à crypter, on applique une ronde de l'algorithme comprenant une ou plusieurs opérations cryptographiques. L'application des opérations cryptographiques de cette ronde est une ronde opératoire $R_1$. Un bloc de données $Y_1$ est alors

obtenu à une étape 11. Il vérifie l'équation :

$$Y_1 = R_1(X)$$

Puis, à l'étape 12, à ce bloc $Y_1$ sont appliquées les opérations de la deuxième ronde $R_2$ de l'algorithme cryptographique. On obtient alors un bloc Y2 vérifiant l'équation suivante :

$$Y_2 = R_2(Y_1)$$

Les différentes rondes Ri, pour i compris entre 1 et r, sont ainsi appliquées successivement. Une étape 14 représente le bloc de données $Y_{r-1}$ obtenu ainsi en sortie de l'avant dernière ronde $R_{r-1}$. Ce bloc de données vérifie l'équation suivante :

$$Y_{r-1} = R_{r-1}(Y_{r-2})$$

Puis, à l'étape 15, on applique à ce bloc $Y_{r-1}$ les opérations de la dernière ronde $R_r$ de l'algorithme considéré, et on obtient, à l'étape 16, le bloc de données crypté $Y_r$ vérifiant l'équation suivante :

$$Y_r = R_r(Y_{r-1})$$

La figure 2 décrit les étapes d'un procédé d'exécution de calculs cryptographiques selon un mode de réalisation de la présente invention appliqué à un algorithme correspondant à celui qui est décrit ci-avant en référence à la figure 1.

Dans un mode de réalisation de la présente invention, lorsqu'un système opératoire comprend une pluralité d'opérations cryptographiques à appliquer à un bloc de données initial X=(x1,..., xn) de sorte à fournir un bloc de données Z=(z1, ..., zn) résultant de la suite des opérations successives, chaque composante du bloc de données résultant est exprimée sous une forme polynomiale en fonction des différentes composantes $x_1$, ..., $x_n$ du bloc de données initial X.

Plus précisément, lorsqu'un système opératoire S, à appliquer à un bloc de données X initial pour obtenir un bloc de données résultant Z, comprend une succession d'opérations, ce bloc de données X est décomposé en une pluralité de blocs de données de taille inférieure, $x_1$, ..., $x_n$. Puis, chaque bloc de données $z_i$ composant le bloc de données Z peut être obtenu sous une forme polynomiale en fonction des différentes composantes $x_i$ du bloc de données initial. Ainsi, chaque composante du bloc de données résultant de l'application des opérations du système opératoire considéré est alors fournie en une seule transformation. Dans de telles conditions, la succession et la distinction des opérations composant le système opératoire appliqué est alors difficile d'accès à un potentiel attaquant.

On peut donc écrire l'équation suivante :

$$Z = S(X) \qquad [1]$$

et pour i compris entre 1 et n, il existe un polynôme pi tel que :

$$z_i = p_i(x_1, \ldots, x_n) \qquad [2]$$

Les sections suivantes utilisent l'application des différentes opérations cryptographiques sous la forme combinée exprimée ci-dessus.

Dans une variante, on peut aussi prévoir d'obtenir les différentes composantes du bloc de données résultant des opérations cryptographiques du système opératoire sous la forme de tables de valeurs.

Quelque soit la méthode d'application utilisée, soit sous une forme polynomiale, soit encore sous une forme de tables de valeur, les opérations à appliquer selon un système opératoire sont de préférence appliquées de manière combinée, de sorte que chaque composante du bloc de données issu du système opératoire est obtenue en une seule transformation.

Dans un mode de réalisation de la présente invention, l'algorithme à protéger est mis en oeuvre en modifiant les rondes opératoires $R_i$, pour i compris entre 1 et r, telles que décrites ci-avant. Dans un mode de réalisation de la présente invention, au moins une ronde opératoire $R_i$ de l'algorithme est associée à un système opératoire $S_i$ qui est une combinaison d'au moins la ronde opératoire $R_i$ de l'algorithme à protéger, une opération aléatoire $A_i$, et une opération aléatoire V qui fournit une valeur déterminée v avec une probabilité définie. Une exécution combinée des différentes opérations de tels systèmes opératoires $S_i$ permet avantageusement d'obtenir un bloc de données résultant en une seule transformation à partir du bloc de données initial. Ainsi, un potentiel attaquant ne peut pas distinguer les différentes opérations de manière séparée.

Il convient de noter que la présente invention trouve aussi une application aisée au cas où une ronde opératoire de l'algorithme $R_i$ correspond à une seule opération cryptographique.

A une étape 102, un premier système opératoire $S_1$ est appliqué au bloc de données initial 101. Plus précisément, dans un mode de réalisation de la présente invention, ce premier système opératoire correspond à appliquer de manière combinée au bloc de données initial 101 :

- la première ronde opératoire $R_1$ de l'algorithme à protéger ;
- l'opération aléatoire $A_1$ ; et
- la première opération aléatoire V ; puis

à combiner les différents blocs de données résultant de ces trois opérations appliquées au bloc de données initial 101 dé sorte à obtenir un premier bloc de données intermédiaire 107. Cette combinaison est obtenue par application aux résultats de ces trois opérations précitées, d'une application bijective.

Ce système opératoire est mis en oeuvre sous la forme d'une seule transformation, permettant d'obtenir, composante par composante, à partir du bloc de données initial le premier bloc de données intermédiaire, comme décrit ci-avant. Il peut être ainsi mis en oeuvre sous forme polynomiale ou encore sous forme de tables de valeurs.

La section suivante détaille les opérations auxquelles correspond l'application du premier système opératoire $S_1$ selon un mode de réalisation de la présente invention.

On applique au bloc de données X initial 101, qui peut s'écrire sous la forme d'une suite de données $X_1, \ldots, X_n$, la ronde opératoire $R_1$ de l'algorithme considéré. On obtient un premier résultat 103 du premier système opératoire, noté $Y_{1,1}$, correspondant à un bloc de données qui vérifie l'équation suivante :

$$Y_{1,1} = R_1(X)$$

On note que $Y_{1,1}$ est égal à $Y_1$ tel que défini ci-avant en référence à la figure 1. Mais, un tel résultat n'est pas accessible à un attaquant potentiel puisqu'au cours de l'exécution des opérations composant le système opératoire $S_1$, cette étape est mixée aux autres opérations à appliquer décrites ci-dessous, sous forme polynomiale ou sous la forme de tables de valeurs.

Puis, lorsqu'on applique la fonction V au bloc de données initial, on obtient un deuxième résultat 104 de ce premier système opératoire sous la forme d'un bloc de données vérifiant l'équation suivante :

$$Y_{1,2} = V(X)$$

En appliquant l'opération aléatoire $A_1$ sur le bloc de données initial X, on obtient un troisième résultat 105 du premier système opératoire sous la forme d'un bloc de données $Y_{1,3}$ vérifiant l'équation suivante :

$$Y_{1,3} = A_1(X)$$

De sorte à ne pas permettre une distinction des trois résultats décrits ci-dessus en sortie du premier système opératoire, une combinaison 106 de ces trois résultats est effectuée pour fournir le premier bloc de données intermédiaire 107 correspondant à l'exécution de la première ronde de l'algorithme selon un mode de réalisation de la présente invention.

Ainsi, en sortie du premier système opératoire $S_1$, on obtient le bloc dé données intermédiaire $XI_1$ vérifiant l'équation suivante :

$$XI_1 = M1(Y_{1,1} ; Y_{1,2} ; Y_{1,3})$$

où M1 est la combinaison bijective appliquée dans le premier système opératoire $S_1$.

Avantageusement, le bloc de données intermédiaire $XI_1$ diffère du bloc de données $Y_1$ obtenu à l'issue de la première ronde selon l'algorithme cryptographique en référence à la figure 1. Une telle différence ne permet pas de retrouver, à partir du bloc de données $XI_1$, le bloc de données $Y_1$ qui est égal au bloc de données $Y_{1,1}$.

Puis, un deuxième système opératoire 108, correspondant à l'exécution de la deuxième ronde de l'algorithme à protéger selon un mode de réalisation de la présente invention, est appliqué au premier bloc de données intermédiaire 107. Il correspond à l'application combinée d'une opération inverse de l'opération bijective du système opératoire précédent, de la deuxième ronde opératoire de l'algorithme à protéger $R_2$, d'une opération aléatoire $A_2$, d'une opération correspondant à l'identité $I_2$ et d'une opération bijective $M_2$.

Ce deuxième système opératoire correspond à l'application des opérations qui sont décrites de manière séparée en détail dans les sections suivantes mais qui sont appliquées en une seule transformation, composante par composante, comme pour tous les systèmes opératoires décrits selon un mode de réalisation de la présente invention.

Ce système opératoire correspond à l'application en premier lieu de l'opération inverse $M_1^{-1}$ 109 de l'opération $M_1$ sur le bloc de données $XI_1$ de sorte à obtenir de manière distincte les trois résultats décrits pour le premier système opératoire, $Y_{1,1}$ ; $Y_{1,2}$ et $Y_{1,3}$.

Puis, les opérations cryptographiques de la ronde $R_2$ de l'algorithme cryptographique sont alors appliquées au premier résultat $Y_{1,1}$ 110 et on obtient alors un premier résultat $Y_{2,1}$ du deuxième système opératoire $S_2$, vérifiant l'équation suivante :

$$Y_{2,1} = R_2(Y_{1,1})$$

Ensuite, l'opération $I_2$ est appliquée au deuxième résultat du système opératoire précédent $Y_{1,2}$ et on obtient un deuxième résultat 111 du deuxième système opératoire, vérifiant l'équation suivante :

$$Y_{2,2} = Y_{1,2}$$

Dans l'exemple décrit ci-après, l'opération identité est considérée. Mais, cette opération peut être différente d'une opération identité. De manière plus générale, cette opération peut être une opération quelconque.

L'opération aléatoire $A_2$ est appliquée au troisième résultat du système opératoire précédent $Y_{1,3}$ pour obtenir un troisième résultat 112 du deuxième système opératoire, vérifiant l'équation suivante :

$$Y_{2,3} = A_2(Y_{1,1} ; Y_{1,2} ; Y_{1,3})$$

Dans une variante, on peut prévoir que l'opération aléatoire prend en entrée un sous-ensemble quelconque de trois résultats $Y_{1,1}$ ; $Y_{1,2}$ ; $Y_{1,3}$.

Puis, référencée 113, une opération bijective $M_2$ est alors appliquée aux premier, deuxième et troisième résultats du deuxième système opératoire pour obtenir un deuxième bloc de données intermédiaires 114 $XI_2$. Ce bloc de données 114 vérifie l'équation suivante :

$$XI_2 = M_2(Y_{2,1} ; Y_{2,2} ; Y_{2,3})$$

Dans un mode de réalisation de la présente invention, les systèmes opératoires $S_i$, pour i compris entre 2 et r-1, correspondent à l'application d'opérations similaires à celles décrites en référence au deuxième système opératoire.

Il est aisé de déduire de la description ci-dessus, des variantes de l'application de la présente invention dans lesquelles les opérations peuvent différer en fonction des systèmes opératoires. Ainsi, par exemple, on peut prévoir dans certains systèmes opératoires que la fonction I décrite ci-avant est une fonction identité alors que dans d'autres c'est une fonction quelconque différente de la fonction identité.

Puis, le dernier système opératoire 116 $S_r$ correspond à l'application combinée d'une opération correspondant à l'opération inverse 117 de l'opération bijective $M_{r-1}$ du système opératoire précédente, de la ronde opératoire $R_r$ de l'algorithme à protéger, et d'une opération $Z_v$ qui fournit la valeur nulle pour une valeur associée à la valeur déterminée v. Les sections suivantes détaillent l'application séparée de ces différentes opérations. Il convient de noter que, comme dans chaque système opératoire $S_i$, ces opérations sont appliquées de manière combinée.

Le système opératoire précédent $S_{r-1}$ fournit un r-1 ième bloc de données intermédiaire $XI_{r-1}$, référencé

115. L'opération inverse 117 de l'opération bijective $M_{r-1}^{-1}$ fournit à partir du bloc de données intermédiaire $XI_{r-1}$, le premier et le deuxième résultat du système opératoire $S_{r-1}$.

On applique la ronde opératoire $R_r$ de l'algorithme à protéger sur le premier résultat $Y_{r-1,1}$ et on obtient un premier résultat 118 du système opératoire $S_r$ vérifiant l'équation suivante :

$$Y_{r,1} = R_r(Y_{r-1,1})$$

On applique l'opération $Z_v$ au deuxième résultat du système opératoire précédent $Y_{r-1,2}$, et on obtient un deuxième résultat 119 qui vérifie l'équation suivante :

$$Y_{r,2} = Z_v(Y_{r-1,2})$$

Or, ce deuxième résultat $Y_{r-1,2}$ correspond au deuxième résultat du premier système opératoire $Y_{1,2}$. En effet, il n'a pas été transformé par les différents systèmes opératoires qui ont succédé le premier système opératoire, dans le cas où on considère les opérations $I_2, ..., I_{r-1}$ comme étant l'opération identité.

Ainsi, on peut écrire :

$$Y_{r,2} = Z_v(V(X))$$

Dans le cas où les opérations $I_2, ..., I_{r-1}$ sont différentes de l'identité, cette dernière équation n'est plus vérifiée. Mais, dans ce cas, la fonction V est avantageusement choisie de sorte à fournir la valeur zéro pour la valeur associée à la valeur déterminée V(X), c'est-à-dire pour la valeur qui résulte des transformations de V(X) dans les différents systèmes opératoires supplémentaires.

Puis, les premier et deuxième résultats sont enfin combinés pour fournir un rième bloc de données intermédiaire 120 $XI_r$. Ce dernier bloc de données intermédiaire vérifie l'équation suivante :

$$XI_r = Y_{r,1} + Y_{r,2}$$

Dans un cas général, on détermine un nombre de répétitions minimum de versions différentes de l'algorithme à protéger selon un mode de réalisation de la présente invention en fonction de la valeur de probabilité définie avec laquelle l'opération V fournit la valeur déterminée v.

Ainsi, par exemple, si la valeur de probabilité définie est égale à 2/3, il convient de répéter au moins 3 fois l'application de l'ensemble des systèmes opératoires successifs respectivement associés à l'ensemble des opérations cryptographiques de l'algorithme, tels que définis ci-avant, de sorte à pouvoir déterminer après une exécution celui, parmi les derniers blocs de données intermédiaires obtenus, qui correspond au bloc de données crypté selon l'algorithme initial à protéger, c'est à dire celui qui correspond au bloc de données $Y_r$. L'ensemble des systèmes opératoires successifs de chacune des applications vérifie les caractéristiques décrites selon un mode de réalisation de la présente invention, mais ces ensembles de systèmes opératoires peuvent être différents entre eux à chaque nouvelle application. Ils peuvent notamment être basés sur des opérations aléatoires différentes et des opérations bijectives différentes.

Grâce aux dispositions décrites dans les sections précédentes, lorsque la fonction V est introduite dans le premier système opératoire et la fonction $Z_v$ est introduite dans le dernier système opératoire, aucune donnée accessible à un potentiel attaquant ne fournit d'informations sur les données de sortie intermédiaire correspondant à l'exécution directe de l'algorithme à protéger.

Les sections suivantes décrivent un cas particulier d'application de la présente invention dans lequel le bloc de données crypté selon l'algorithme à protéger est déterminé en exécutant une seule fois le procédé d'exécution selon un mode de réalisation de la présente invention.

Lorsqu'on se place dans le corps fini GF(2), tout polynôme P ne peut prendre que deux valeurs soit 0, soit 1. On peut choisir :

$$V(X) = (P(X) + v_1, ..., P(X) + v_m)$$

Ainsi, V(X) ne peut prendre que deux valeurs différentes, soit :

$$v = (v_1, ..., v_n) ;$$

soit

$$v' = (v_1+1, ..., v_n+1)$$

Dans un tel contexte, si la fonction $Z_v$ prend la valeur 0 en les valeurs v et v', alors une seule itération de l'exécution de l'algorithme à protéger selon un mode de réalisation de la présente invention est suffisante pour obtenir le bloc de données crypté selon ledit algorithme.

**Revendications**

1. Procédé d'exécution d'un calcul cryptographique dans un composant électronique, selon un algorithme cryptographique déterminé incluant au moins une première et une deuxième opération cryptographique, ledit algorithme étant adapté pour fournir un bloc de données crypté à partir d'un bloc de données initial ;

   ledit procédé comprenant les étapes suivantes :

   /a/ appliquer un premier système opératoire (102) sur le bloc de données initial et obtenir un premier bloc de données intermédiaire, ledit premier système opératoire correspondant à une combinaison d'au moins la première opération cryptographique (103), une première opération aléatoire (104) qui fournit une valeur déterminée avec une valeur de probabilité définie, une seconde opération aléatoire (105), et une opération bijective (106) ;

   /b/ appliquer un deuxième système opératoire (116) sur le bloc de données intermédiaire fourni à l'étape précédente et obtenir un deuxième bloc de données intermédiaire, ledit deuxième système opératoire correspondant à une combinaison d'au moins l'opération inverse (117) de l'opération bijective du système opératoire précédent, la deuxième opération cryptographique (118), et une opération qui fournit la valeur nulle pour une valeur associée à ladite valeur déterminée (119) ;

   /c/ répéter les étapes /a/ et /b/ N fois, N étant un nombre entier déterminé en fonction de ladite valeur de probabilité définie ; et

   /d/ déterminer le bloc de données crypté à partir du ou des deuxièmes blocs de données intermédiaires, en fonction de la valeur de probabilité définie.

2. Procédé d'exécution d'un calcul cryptographique selon la revendication 1, dans lequel l'application du premier système opératoire correspond à l'application de manière combinée de :

   - la première opération cryptographique fournissant un premier résultat (103) du premier système opératoire à partir du bloc de données initial ;
   - la première opération aléatoire fournissant un deuxième résultat (104) du premier système opératoire à partir du bloc de données initial ;
   - la seconde opération aléatoire fournissant un troisième résultat (105) du premier système opératoire à partir du bloc de données initial ; et
   - l'opération bijective (106) fournissant le premier bloc de données intermédiaire (107) à partir des premier, deuxième et troisième résultats du premier système opératoire ; et

   dans lequel l'application du deuxième système opératoire correspond à l'application, de manière combinée, de :

   - l'opération inverse (117) de l'opération bijective du système opératoire précédent fournissant, à partir du bloc de données intermédiaire obtenu par le système opératoire précédent, lesdits premier et deuxième résultats du système opératoire précédent ;
   - la deuxième opération cryptographique (118) fournissant un premier résultat du deuxième système opératoire à partir du premier résultat du système opératoire précédent ;
   - l'opération qui fournit la valeur nulle pour une valeur associée à la valeur déterminée (119) à partir du deuxième résultat du système opératoire précédent, fournissant ainsi un deuxième résultat du deuxième système opératoire ; et
   - une addition du premier et du deuxième résultat du deuxième système opératoire fournissant le deuxième bloc de données intermédiaire (120).

3. Procédé d'exécution d'un calcul cryptographique selon la revendication 1 ou 2, dans lequel chaque donnée du premier et du deuxième bloc de données intermédiaire est obtenue sous forme polynomiale à partir respectivement des données du bloc de données initial et des données du bloc de données intermédiaire.

4. Procédé d'exécution d'un calcul cryptographique selon la revendication 1 ou 2, dans lequel les premier et deuxième systèmes opératoires sont appliqués sous forme de tables de valeurs respectivement au bloc de données initial et au premier bloc de données intermédiaire.

5. Procédé d'exécution d'un calcul cryptographique selon l'une quelconque des revendications précédentes, dans lequel la première opération aléatoire qui fournit une valeur déterminée avec une valeur de probabilité définie est effectuée dans un espace mathématique fini dans lequel elle fournit au plus un ensemble déterminé de valeurs ; et

   dans lequel l'opération qui fournit la valeur nulle pour une valeur associée à ladite valeur déterminée fournit la valeur nulle en outre pour les valeurs dudit ensemble qui sont différentes de ladite valeur déterminée.

6. Procédé d'exécution d'un calcul cryptographique selon l'une quelconque des revendications précédentes, comprenant en outre entre l'étape /a/ et l'étape /b/, lorsque l'algorithme inclut un ensemble de K opération(s) cryptographique(s) supplémentaire(s) entre les première et deuxième opérations cryptographiques, K étant un entier positif, l'étape suivante :

- appliquer un nombre K de système(s) opératoire(s) supplémentaire(s) (108) successifs respectivement associés audit ensemble d'opération(s) cryptographique(s) supplémentaire(s), chaque système opératoire supplémentaire fournissant un bloc de données intermédiaire supplémentaire (114), à partir du bloc de données intermédiaire (107) fourni par le système opératoire précédent ;

dans lequel chaque système opératoire supplémentaire correspond à une combinaison d'au moins l'opération inverse (109) de l'opération bijective du système opératoire précédent, l'opération cryptographique supplémentaire (110) associée audit système opératoire supplémentaire, une opération supplémentaire (111), une opération aléatoire (112) et une opération bijective (113).

**7.** Procédé d'exécution d'un calcul cryptographique selon la revendication 6, dans lequel chaque système opératoire supplémentaire correspond à l'application, de manière combinée, de :

- l'opération inverse (109) de l'opération bijective du système opératoire précédent, fournissant, à partir du bloc de données intermédiaire fourni par le système opératoire précédent, les premier (131), deuxième (132) et troisième (133) résultats du système opératoire précédent ;
- l'opération cryptographique supplémentaire (110) fournissant un premier résultat (134) du système opératoire supplémentaire à partir du premier résultat du système opératoire précédent ;
- l'opération supplémentaire (111) fournissant un deuxième résultat du système opératoire supplémentaire à partir du deuxième résultat (132) du système opératoire précédent ;
- l'opération aléatoire (112) fournissant un troisième résultat (136) du système opératoire supplémentaire à partir d'au moins un parmi les premier, deuxième et troisième résultats du système opératoire précédent ; et
- une opération bijective (113) fournissant le bloc de données intermédiaire supplémentaire à partir des premier, deuxième et troisième résultats du système opératoire supplémentaire.

**8.** Procédé d'exécution d'un calcul cryptographique selon l'une des revendications 6 et 7, dans lequel l'opération supplémentaire (111) est une opération d'identité et dans lequel la valeur associée à la valeur déterminée est égale à la valeur déterminée.

**9.** Composant électronique d'exécution d'un calcul cryptographique selon un algorithme cryptographique incluant au moins une première et une deuxième opération cryptographique, ledit algorithme étant adapté pour fournir un bloc de données crypté à partir d'un bloc de données initial ;
ledit composant comprenant :

- des premiers moyens pour appliquer un premier système opératoire (102) sur le bloc de données initial et fournir un premier bloc de données intermédiaire, ledit premier système opératoire correspondant à une combinaison d'au moins la première opération cryptographique, une première opération aléatoire qui fournit une valeur déterminée avec une valeur de probabilité définie, une seconde opération aléatoire, et une opération bijective ;
- des deuxièmes moyens pour appliquer un deuxième système opératoire (116) sur le bloc de données intermédiaire fourni par les moyens précédents et fournir un deuxième bloc de données intermédiaire, ledit deuxième système opératoire correspondant à une combinaison d'au moins une opération inverse de l'opération bijective des moyens précédents, la deuxième opération cryptographique et une opération qui fournit la valeur nulle pour une valeur associée à ladite valeur déterminée ;
- des moyens pour répéter l'application des premier et second systèmes opératoires N fois, N étant un nombre entier déterminé en fonction de ladite valeur de probabilité définie ; et
- des moyens pour déterminer le bloc de données crypté à partir du ou des deuxièmes blocs de données intermédiaires, en fonction de la valeur de probabilité définie.

**10.** Composant électronique d'exécution d'un calcul cryptographique selon la revendication 9, dans lequel l'une au moins parmi la première opération aléatoire, la seconde opération aléatoire, et l'opération bijective diffère à chaque répétition des premier et second systèmes opératoires.

## Claims

**1.** Method for carrying out a cryptographic calculation in an electronic component, according to a specified cryptographic algorithm including at least a first and a second cryptographic operation, said algorithm being designed to generate an encrypted data block from an initial data block;
said method comprising the following steps:

(a) applying a first operational system (102) to the initial data block and obtaining a first intermediate data block, said first operational system corresponding to a combination of at least the first cryptographic operation (103), a first random operation (104) that generates a determinate value with a defined probability value, a second random operation (105), and a bijective operation (106);

(b) applying a second operational system (116) to the intermediate data block generated in the preceding step and obtaining a second intermediate data block, said second operational system corresponding to a combination of at least the inverse (117) operation of the bijective operation of the preceding operational system, the second cryptographic operation (118), and an operation that generates the value zero for a value associated with said determinate value (119);

(c) repeating the steps (a) and (b) N times, N being an integer determined depending on said defined probability value; and

(d) determining the encrypted data block from the second intermediate data block(s) depending on the defined probability value.

2. Method for carrying out a cryptographic calculation according to Claim 1, in which the application of the first operational system corresponds to the application in combination of:

- the first cryptographic operation generating a first result (103) of the first operational system from the initial data block;
- the first random operation generating a second result (104) of the first operational system from the initial data block;
- the second random operation generating a third result (105) of the first operational system from the initial data block; and
- the bijective operation (106) generating the first intermediate data block (107) from the first, second and third results of the first operational system; and

in which the application of the second operational system corresponds to the application in combination of:

- the inverse operation (117) of the bijective operation of the preceding operational system generating, from the intermediate data block obtained by the preceding operational system, said first and second results of the preceding operational system;
- the second cryptographic operation (118) generating a first result of the second operational system from the first result of the preceding operational system;
- the operation that generates the value zero for a value associated with the determinate value (119) from the second result of the preceding operational system, hence generating a second result of the second operational system; and
- an addition of the first and the second result of the second operational system generating the second intermediate data block (120).

3. Method for carrying out a cryptographic calculation according to Claim 1 or 2, in which each piece of data in the first and the second intermediate data blocks may be obtained in polynomial form from data of the initial data block and data of the intermediate data block respectively.

4. Method for carrying out a cryptographic calculation according to Claim 1 or 2, in which the first and second operational systems are applied in the form of tables of values to the initial data block and to the first intermediate data block respectively.

5. Method for carrying out a cryptographic calculation according to any one of the preceding claims, in which the first random operation, which generates a determinate value with a defined probability value, is carried out in a finite mathematical space in which it generates at most one determinate set of values; and in which the operation that provides the value zero for a value associated with said determinate value also generates the value zero for the values of said set that are different from said determinate value.

6. Method for carrying out a cryptographic calculation according to any one of the preceding claims, furthermore comprising, when the algorithm includes a set of K additional cryptographic operation(s) between the first and second cryptographic operations, K being a positive integer, the following step between the step (a) and the step (b):

- applying a number K of successive additional operational system(s) (108) respectively associated with said set of additional cryptographic operation(s), each additional operational system generating an additional intermediate data block (114) from the intermediate data block (107) generated by the preceding operational system;

in which each additional operational system corresponds to a combination of at least the inverse operation (109) of the bijective operation of the preceding operational system, the additional cryptographic operation (110) associated with said additional operational system, an additional operation (111), a random operation (112) and a bijective operation (113).

7. Method for carrying out a cryptographic calculation according to Claim 6, in which each additional operational system corresponds to the application in combination of:

- the inverse operation (109) of the bijective operation of the preceding operational system, generating, from the intermediate data block provided by the preceding operational system, the first (131), second (132) and third (133) results of the preceding operational system;
- the additional cryptographic operation (110) generating a first result (134) of the additional operational system from the first result of the preceding operational system;
- the additional operation (111) generating a second result of the additional operational system from the second result (132) of the preceding operational system;
- the random operation (112) generating a third result (136) of the additional operational system from at least one of the first, second and third results of the preceding operational system; and
- a bijective operation (113) generating the additional intermediate data block from the first, second and third results of the additional operational system.

8. Method for carrying out a cryptographic calculation according to claim 6 or 7, in which the additional operation (111) is an identity operation and in which the value associated with the determinate value is equal to the determinate value.

9. Electronic component for carrying out a cryptographic calculation according to a cryptographic algorithm including at least a first and a second cryptographic operation, said algorithm being designed to generate an encrypted data block from an initial data block, said component comprising:

- first means for applying a first operational system (102) to the initial data block and generating a first intermediate data block, said first operational system corresponding to a combination of at least the first cryptographic operation, a first random operation that generates a determinate value with a defined probability value, a second random operation, and a bijective operation;
- second means for applying a second operational system (116) to the intermediate data block generated by the preceding means and generating a second intermediate data block, said second operational system corresponding to a combination of at least an inverse operation of the bijective operation of the preceding means, the second cryptographic operation, and an operation that generates the value zero for a value associated with said determinate value;
- means for repeating the application of the first and second operational systems N times, N being an integer determined depending on said defined probability value; and
- means for determining the encrypted data block from the second intermediate data block (s) depending on the defined probability value.

10. Electronic component for carrying out a cryptographic calculation according to Claim 9, in which at least one of the first random operation, the second random operation and the bijective operation differs at each repetition of the first and second operational systems.

**Patentansprüche**

1. Verfahren zur Ausführung einer kryptographischen Berechnung in einem elektronischen Bauelement gemäß einem bestimmten kryptographischen Algorithmus, der mindestens eine erste und eine zweite kryptographische Operation umfasst, wobei der Algorithmus dazu ausgelegt ist, anhand eines anfänglichen Datenblocks einen verschlüsselten Datenblock zu liefern;

wobei das Verfahren die folgenden Schritte umfasst:

/a/ Anwenden eines ersten Operationssystems (102) auf den anfänglichen Datenblock und Erhalten eines ersten Zwischendatenblocks, wobei das erste Operationssystem einer Kombination mindestens der ersten kryptographischen Operation (103), einer ersten Zufallsoperation (104), die einen bestimmten Wert mit einem definierten Wahrscheinlichkeitswert liefert, einer zweiten Zufallsoperation (105) und einer bijektiven Operation (106) entspricht;
/b/ Anwenden eines zweiten Operationssystems (116) auf den im vorangehenden Schritt gelieferten Zwischendatenblock und Erhalten eines zweiten Zwischendatenblocks, wobei das zweite Operationssystem einer Kombination mindestens der inversen Operation (117) der bijektiven Operation des vorangehenden Operationssystems, der zweiten kryptographische Operation (118) und einer Operation, die den Wert null für einen Wert liefert, der dem bestimmten Wert zugeordnet ist (119), entspricht;
/c/ N-maliges Wiederholen der Schritte /a/ und /b/, wobei N eine ganze Zahl ist, die in Abhängigkeit von dem definierten Wahrscheinlichkeitswert bestimmt wird; und

/d/ Bestimmen des verschlüsselten Datenblocks anhand des oder der zweiten Zwischendatenblöcke in Abhängigkeit von dem definierten Wahrscheinlichkeitswert.

2. Verfahren zur Ausführung einer kryptographischen Berechnung nach Anspruch 1, in dem die Anwendung des ersten Operationssystems der kombinierten Anwendung von Folgendem entspricht:

- der ersten kryptographischen Operation, die ein erstes Ergebnis (103) des ersten Operationssystems anhand des anfänglichen Datenblocks liefert;
der ersten Zufallsoperation, die ein zweites Ergebnis (104) des ersten Operationssystems anhand des anfänglichen Datenblocks liefert;
- der zweiten Zufallsoperation, die ein drittes Ergebnis (105) des ersten Operationssystems anhand des anfänglichen Datenblocks liefert; und
- der bijektiven Operation (106), die den ersten Zwischendatenblock (107) anhand des ersten, des zweiten und des dritten Ergebnisses des ersten Operationssystems liefert; und

in dem die Anwendung des zweiten Operationssystems der kombinierten Anwendung von Folgendem entspricht:
- der inversen Operation (117) der bijektiven Operation des vorangehenden Operationssystems, die anhand des durch das vorangehende Operationssystem erhaltenen Zwischendatenblocks das erste und das zweite Ergebnis des vorangehenden Operationssystems liefert;
- der zweiten kryptographischen Operation (118), die ein erstes Ergebnis des zweiten Operationssystems anhand des ersten Ergebnisses des vorangehenden Operationssystems liefert;
- der Operation, die den Wert null für einen Wert, der dem bestimmten Wert zugeordnet ist (119), anhand des zweiten Ergebnisses des vorangehenden Operationssystems liefert, die somit ein zweites Ergebnis des zweiten Operationssystems liefert; und
- einer Addition des ersten und des zweiten Ergebnisses des zweiten Operationssystems, die den zweiten Zwischendatenblock (120) liefert.

3. Verfahren zur Ausführung einer kryptographischen Berechnung nach Anspruch 1 oder 2, in dem alle Daten des ersten und des zweiten Zwischendatenblocks in Polynomform anhand der Daten des anfänglichen Datenblocks bzw. der Daten des Zwischendatenblocks erhalten werden.

4. Verfahren zur Ausführung einer kryptographischen Berechnung nach Anspruch 1 oder 2, in dem das erste und das zweite Operationssystem in Form von Tabellen von Werten auf den anfänglichen Datenblock bzw. den ersten Zwischendatenblock angewendet werden.

5. Verfahren zur Ausführung einer kryptographischen Berechnung nach einem der vorangehenden Ansprüche, in dem die erste Zufallsoperation, die einen bestimmten Wert mit einem definierten Wahrscheinlichkeitswert liefert, in einem endlichen mathematischen Raum durchgeführt wird, in dem sie höchstens eine bestimmte Menge von Werten liefert; und in dem die Operation, die den Wert null für einen Wert liefert, der dem bestimmten Wert zugeordnet ist, den Wert null außerdem für die Werte der Menge liefert, die vom bestimmten Wert verschieden sind.

6. Verfahren zur Ausführung einer kryptographischen Berechnung nach einem der vorangehenden Ansprüche, das außerdem zwischen dem Schritt /a/ und dem Schritt /b/, wenn der Algorithmus eine Menge von K zusätzlichen kryptographischen Operation(en) zwischen der ersten und der zweiten kryptographischen Operation umfasst, wobei K eine positive ganze Zahl ist, den folgenden Schritt umfasst:

- Anwenden einer Anzahl K von aufeinander folgenden zusätzlichen Operationssystemen (108), die jeweils der Menge von zusätzlichen kryptographischen Operationen zugeordnet sind, wobei jedes zusätzliche Operationssystem einen zusätzlichen Zwischendatenblock (114) anhand des durch das vorangehende Operationssystem gelieferten Zwischendatenblocks (107) liefert;

wobei jedes zusätzliche Operationssystem einer Kombination mindestens der inversen Operation (109) der bijektiven Operation des vorangehenden Operationssystems, der zusätzlichen kryptographischen Operation (110), die dem zusätzlichen Operationssystem zugeordnet ist, einer zusätzlichen Operation (111), einer Zufallsoperation (112) und einer bijektiven Operation (113) entspricht.

7. Verfahren zur Ausführung einer kryptographischen Berechnung nach Anspruch 6, in dem jedes zusätzliche Operationssystem der kombinierten Anwendung von Folgendem entspricht:

- der inversen Operation (109) der bijektiven Operation des vorangehenden Operationssystems, die anhand des vom vorangehenden Operationssystem gelieferten Zwischendatenblocks das erste (131), das zweite (132) und das dritte (133) Ergebnis des vorangehenden Operationssystems liefert;
- der zusätzlichen kryptographischen Operation (110), die ein erstes Ergebnis (134) des zusätzlichen Operationssystems anhand des ersten Ergebnisses des vorangehenden Operationssystems liefert;

- der zusätzlichen Operation (111), die ein zweites Ergebnis des zusätzlichen Operationssystems anhand des zweiten Ergebnisses (132) des vorangehenden Operationssystems liefert;

- der Zufallsoperation (112), die ein drittes Ergebnis (136) des zusätzlichen Operationssystems anhand des ersten, des zweiten und/oder des dritten Ergebnisses des vorangehenden Operationssystems liefert; und

- einer bijektiven Operation (113), die den zusätzlichen Zwischendatenblock anhand des ersten, des zweiten und des dritten Ergebnisses des zusätzlichen Operationssystems liefert.

8. Verfahren zur Ausführung einer kryptographischen Berechnung nach einem der Ansprüche 6 und 7, in dem die zusätzliche Operation (111) eine Identitätsoperation ist und in dem der Wert, der dem bestimmten Wert zugeordnet ist, gleich dem bestimmten Wert ist.

9. Elektronisches Bauelement zur Ausführung einer kryptographischen Berechnung gemäß einem kryptographischen Algorithmus, der mindestens eine erste und eine zweite kryptographische Operation umfasst, wobei der Algorithmus zum Liefern eines verschlüsselten Datenblocks anhand eines anfänglichen Datenblocks ausgelegt ist;
wobei das Bauelement Folgendes umfasst:

- erste Mittel zum Anwenden eines ersten Operationssystems (102) auf den anfänglichen Datenblock und zum Liefern eines ersten Zwischendatenblocks, wobei das erste Operationssystem einer Kombination von mindestens der ersten kryptographischen Operation, einer ersten Zufallsoperation, die einen bestimmten Wert mit einem definierten Wahrscheinlichkeitswert liefert, einer zweiten Zufallsoperation und einer bijektiven Operation entspricht;

- zweite Mittel zum Anwenden eines zweiten Operationssystems (116) auf den Zwischendatenblock, der durch die vorangehenden Mittel geliefert wird, und zum Liefern eines zweiten Zwischendatenblocks, wobei das zweite Operationssystem einer Kombination von mindestens einer inversen Operation der bijektiven Operation der vorangehenden Mittel, der zweiten kryptographischen Operation und einer Operation, die den Wert null für einen dem bestimmten Wert zugeordneten Wert liefert;

- Mittel zum N-maligen Wiederholen der Anwendung des ersten und des zweiten Operationssystems, wobei N eine ganze Zahl ist, die in Abhängigkeit von dem definierten Wahrscheinlichkeitswert bestimmt wird; und

- Mittel zum Bestimmen des verschlüsselten Datenblocks anhand des oder der zweiten Zwischendatenblöcke in Abhängigkeit von dem definierten Wahrscheinlichkeitswert.

10. Elektronisches Bauelement zur Ausführung einer kryptographischen Berechnung nach Anspruch 9, in dem sich die erste Zufallsoperation, die zweite Zufallsoperation und/oder die bijektive Operation bei jeder Wiederholung des ersten und des zweiten Operationssystems unterscheiden.

**FIG. 1**

**FIG. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2776445 A

**Littérature non-brevet citée dans la description**

- **Matthias Jacob ; Dan Boneh ; Edward W. Felten.** *Attacking an obfuscated cipher by injecting faults,* 2003
- **S. Chow ; P. Eisen ; H. Johnson ; P.C. van Oorschot.** White-Box Cryptography and an AES Implementation. *White-Box Cryptography and an AES Implementation*
- **Olivier Billet ; Henri Gilbert ; Charaf Ech-Chatbi.** *Cryptanalysis of a White-Box AES implementation*